**Europäisches Patentamt**

**European Patent Office**

**Office européen des brevets**

(11) Numéro de publication : **0 399 861 B1**

(12) **FASCICULE DE BREVET EUROPEEN**

(45) Date de publication du fascicule du brevet :
**13.04.94 Bulletin 94/15**

(21) Numéro de dépôt : **90401200.2**

(22) Date de dépôt : **04.05.90**

(51) Int. Cl.⁵ : **G01D 5/26,** G01H 9/00,
H04J 14/06

(54) **Dispositif de lecture de capteurs polarimétriques et interférométriques.**

(30) Priorité : **23.05.89 FR 8906717**

(43) Date de publication de la demande :
**28.11.90 Bulletin 90/48**

(45) Mention de la délivrance du brevet :
**13.04.94 Bulletin 94/15**

(84) Etats contractants désignés :
**DE GB NL**

(56) Documents cités :
**EP-A- 0 191 588**
**US-A- 4 799 797**

(56) Documents cités :
**OPTICAL FIBER SENSORS, 1988 TECHNICAL DIGEST SERIES, New Orleans, Louisiana, 27-29 janvier 1988, vol. 2, partie 1, pages 76-79, Optical Society of America, Washington DC, US; D.-T. JONG et al.: "Frequency division multiplication of optical fiber sensors using an optical delay line with a frequency shifter" ELECTRONICS LETTERS, vol. 21, no. 4, 14 février 1985, pages 148-149, Stevenage, Herts, GB; M. CORKE et al.: "Combined Michelson and polarimetric fibre-optic interferometric sensor"**

(73) Titulaire : **THOMSON-CSF**
**173, Boulevard Haussmann**
**F-75008 Paris (FR)**

(72) Inventeur : **Turpin, Marc**
**Thomson-CSF, SCPI, Cédex 67**
**F-92045 Paris la Défense (FR)**
Inventeur : **Refregier, Philippe**
**Thomson-CSF, SCPI, Cédex 67**
**F-92045 Paris la Défense (FR)**

(74) Mandataire : **Chaverneff, Vladimir et al**
**THOMSON-CSF SCPI B.P. 329 50, rue Jean-Pierre Timbaud**
**F-92402 Courbevoie Cédex (FR)**

## Description

La présente invention se rapporte à un dispositif de lecture de capteurs polarimétriques et/ou interférométriques.

Pour décoder les informations en provenance d'un réseau de capteurs multiplexé en cohérence, il est nécessaire de compenser les déphasages à l'aide d'un dispositif interférométrique de lecture. Suivant l'architecture du réseau de capteurs, on utilise des interféromètres de type Mach-Zehnder à fibres optiques ou des interféromètres de type Michelson. Dans le cas particulier du multiplexage en faible cohérence, l'utilisation de fibres optiques non biréfringentes est délicate compte tenu de la précision requise pour l'ajustage de la longueur des tronçons de fibre utilisés dans les interféromètres passifs de type Mach-Zehnder. Dans le cas général, l'interféromètre de Michelson est largement utilisé en laboratoire compte tenu de sa grande versatilité et de sa facilité d'emploi. Cependant, l'emploi hors laboratoire, par exemple en site industriel, est très délicat, en particulier à cause de la fragilité des miroirs mobiles de cet interféromètre.

On connaît d'après le document EP-A-191 588 un dispositif de lecture de capteurs interférométrique, ce dispositif de lecture comportant des lecteurs à fibres montées en interféromètres de type Mach-Zehnder ou des lecteurs à coupleurs de polarisation.

L'invention a pour objet un dispositif de lecture de capteurs polarimétriques et/ou interférométriques qui soit facile à régler et à utiliser et qui puisse être employé dans un environnement hostile (milieu industriel, matériel embarqué...).

Le dispositif de lecture conforme à l'invention pour la lecture de n capteurs polarimétriques et/ou interférométriques faisant partie d'un réseau monofibre multipoints comporte une fibre optique principale sur laquelle sont disposés n coupleurs, à maintien de polarisation, chacun de ces coupleurs étant relié à une extrémité d'une fibre de compensation de déphasage, dont l'autre extrémité est reliée via un polariseur à un détecteur, les fibres de compensation étant telles que la somme de la longueur de fibre principale depuis l'entrée de la fibre principale jusqu'au coupleur correspondant et de la longueur de chacune de ces fibres de compensation compense le retard produit dans la fibre du réseau de capteurs.

La présente invention sera mieux comprise à la lecture de la description détaillée d'un mode de réalisation, pris à titre d'exemple non limitatif et illustré par le dessin annexé, sur lequel :
- la figure 1 est le schéma simplifié d'un dispositif de lecture connu de capteurs,
- la figure 2 est le schéma d'un dispositif de lecture conforme à l'invention, et
- la figure 3 est un diagramme explicatif du fonctionnement d'un polarimètre élémentaire du dispositif de la figure 2.

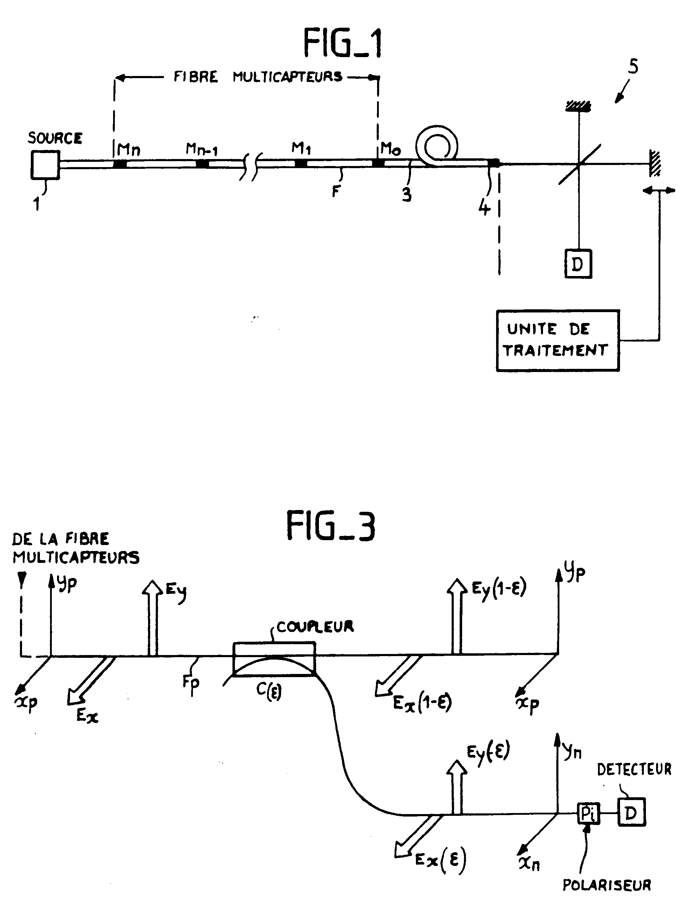

Le système de la figure 1 est constitué d'une source lumineuse 1 alimentant un réseau de capteurs 2 multiplexé en cohérence. Ce réseau est un réseau monofibre (fibre F) multipoints de type polarimétrique, à n capteurs déterminés entre des points de couplage de polarisation réalisés sur la fibre F.

La fibre 2 est suivie d'une fibre de déport 3 qui se termine par un polariseur 4. A la suite du polariseur 4, on branche un dispositif de lecture 5 qui est, dans l'exemple représenté, un interféromètre de type Michelson.

Les n capteurs de la fibre 2 sont multiplexés en cohérence. Le dispositif interférométrique de lecture 5 sert à compenser les retards ou déphasages des différents capteurs. Ce dispositif présente les inconvénients cités ci-dessus.

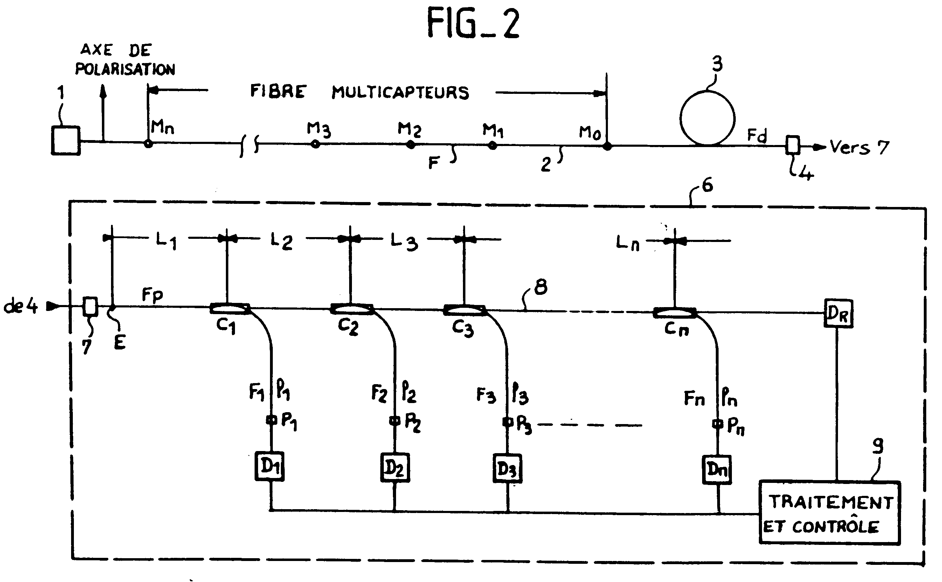

Le dispositif de l'invention, schématisé en figure 2, comporte les mêmes éléments 1 à 3 que celui de la figure 1. La fibre de déport 3 est reliée au dispositif de lecture 6 décrit en détail ci-dessous, un modulateur de polarisation TE/TM 7 étant inséré en un endroit approprié de la fibre 3. Ce modulateur 7, avantageusement en optique intégrée, assure l'homodynage passif du signal provenant des capteurs.

Le dispositif de lecture 6 comporte une fibre principale 8 qui est reliée à l'extrémité de la fibre 3. La fibre 8 est une fibre optique monomode biréfringente à conservation de polarisation. Sur la fibre 8, on dispose $\underline{n}$ coupleurs C1 à Cn (n étant le nombre de capteurs de la fibre 2). On a ainsi à partir de l'entrée E de la fibre 8, n tronçons successifs délimités par les coupleurs, de longueurs respectives L1,L2...Ln. L'extrémité de la fibre 8 au-delà du coupleur Cn est de longueur quelconque. Les coupleurs C1 à Cn sont des coupleurs monomodes à conservation de la polarisation des ondes incidentes. Chacun de ces coupleurs prélève une partie de l'énergie arrivant à la fibre 8, et la couple dans une fibre optique secondaire, F1 à Fn respectivement. Ces fibres secondaires sont également monomodes, biréfringents à maintien de polarisation leurs longueurs respectives étant l1 à ln. A l'extrémité de chaque fibre secondaire F1 à Fn, on branche un dispositif polariseur, P1 à Pn respectivement, et un détecteur, D1 à Dn respectivement. Ces n détecteurs peuvent être distincts ou faire partie d'une même barrette de détecteurs. A l'extrémité de la fibre 8, on branche un détecteur Dr qui peut fournir une valeur de référence utilisée de la façon expliquée ci-dessous. Tous les détecteurs D1 à Dn et Dr sont reliés à un dispositif central de traitement 9, qui assure les fonctions d'adressage séquentiel rapide des détecteurs et de comptage/décomptage des franges d'interférence.

Le dispositif de lecture 6 comporte ainsi n polarimètres formés d'une fibre secondaire Fi avec son polariseur Pi et son détecteur Di et les tronçons de fibre principale se trouvant en amont du coupleur Ci correspondant (i allant de 1 à n) : le premier polarimètre comprend L1 et F1, le deuxième L1+L2 et F2... et le dernier les tronçons L1 à Ln et Fn.

Le réseau de capteurs 2 (figures 1 et 2), de type polarimétrique ou interférométrique, est adressé en cohérence, de préférence en faible cohérence. Le signal en provenance du réseau 2 est constitué d'une suite discrète de trains d'ondes secondaires décorrélés, et d'un train d'ondes principal. Le train d'ondes principal émis par la source lumineuse 1 a, par exemple, si l'adressage se fait en faible cohérence, une longueur de cohérence comprise entre 20 et 100 μm environ. Ce train d'ondes principal est injecté dans la fibre F biréfringente avec une polarisation linéaire parallèle à l'un des axes propres (axe rapide par exemple) de la fibre F, et s'y propage sans perturbation. A chaque point de couplage Mn à Mo, une fraction déterminée (par exemple quelques $10^{-3}$ à quelques $10^{-2}$) de l'énergie circulant dans la fibre F à cet endroit est transférée dudit axe propre (axe rapide) vers l'autre axe propre (axe lent par exemple) orthogonal au premier. La vitesse de propagation de l'énergie ainsi couplée est modifiée en conséquence (retardée, pour le couplage vers l'axe lent). A la sortie de la fibre F, le train d'ondes principal est dans le même état de polarisation qu'à l'injection dans cette fibre F, et les trains d'ondes secondaires, correspondant aux points de couplage, sont dans l'état de polarisation croisé. Pour déporter les informations de sortie de la fibre F, qui se trouvent codées par les différents couplages successifs d'un axe vers l'axe orthogonal, vers le dispositif de lecture, on utilise la fibre 3 biréfringente, orientée à 45° par rapport à la fibre F. Cette fibre 3 permet de transporter sur chacun de ses axes de polarisation l'ensemble des informations fournies par la fibre F (train d'ondes principal et trains d'ondes secondaires). On sélectionne, dans le dispositif de la figure 1, l'une des polarisations à l'aide du polariseur 4 (classique ou à fibre optique). Dans le dispositif de l'invention (figure 2), cette sélection est faite plus en aval, à l'extrémité de chaque fibre secondaire (polariseurs P1 à Pn).

Dans le dispositif de lecture 6 de l'invention, l'ensemble des trains d'ondes (principal et secondaires) issu de la fibre 3 est couplé à 45° des axes propres de la fibre principale 8, les trains d'ondes secondaires s'y propageant à une vitesse différente de celle du train d'ondes principal.

A chaque coupleur Ci rencontré, les états de polarisation sont conservés sur la fibre principale 8 et sur la fibre secondaire Fi correspondante, comme représenté en figure 3. Les déphasages sont donc cumulatifs le long de la fibre principale 8 et le long des fibres secondaires F1 à Fn. Ainsi, le déphasage correspondant au dernier tronçon (entre M1 et Mo) de la fibre capteur F est compensé par le premier tronçon (L1) de la fibre principale 8 et la première fibre secondaire F1, et ainsi de suite.

Les relations qui lient les différents retards dans la fibre F aux compensations correspondantes du dispositif de lecture 6 s'écrivent :

| Capteurs | Fibres de compensation |
|---|---|
| $n^{ième}$ (M1;Mo) | L1 + F1 |
| $n^{ième}$ et $n-1^{ième}$ (M2;Mo) | L1+L2+F2 |
| . | . |
| . | . |
| . | . |
| . | . |
| $n^{ième}$ et $n-1^{ième}$ et 1er (Mn;Mo) | L1+L2+...+Ln+Fn |

Les valeurs pour chacun des capteurs sont obtenues par différences.

Pour compenser correctement les différents retards, il faut ajuster les longueurs de fibres de compensation (pour obtenir l'égalité des chemins optiques). Rappelons que dans un polarimètre à fibre biréfringente, un déphasage de $2\pi$ correspond non pas à la longueur d'onde de la source, mais à la longueur de battement. La longueur de battement vaut typiquement quelques millimètres pour les fibres à conservation de polarisation usuelles. Ainsi, les longueurs de fibres (de la fibre principale et des fibres secondaires) doivent être ajustées à la longueur de dépolarisation Ld, qui est fonction de la longueur de cohérence de la source et de la biréfringence des fibres optiques. Dans le cas présent, cette longueur Ld vaut quelques centimètres, ce qui rend facile l'ajustage des longueurs de fibres nécessaires.

Le dispositif de lecture de l'invention peut être utilisé queue que soit la longueur d'onde de la source (0,84 ou 1,3μm habituellement), avec des longueurs de cohérence faibles (par exemple comprises entre 20 et 100μm environ comme précisé ci-dessus).

Le dispositif de lecture de l'invention est totalement compatible avec des éléments d'optique intégrée (en niobate de lithium par exemple) grâce au caractère monomode des fibres utilisées.

Le détecteur supplémentaire Dr, disposé à l'extrémité aval de la fibre 8, est avantageusement utilisé pour contrôler le flux lumineux du train d'ondes principal arrivant à l'extrémité de la fibre 8. La valeur que fournit le détecteur Dr sert de référence pour le comptage et le décomptage des franges d'interférence, qui sont réalisés à partir des variations des intensités relatives VDi/VDr (VDi : valeur fournie par le détecteur de rang i et VDr : valeur fournie par Dr).

Grâce aux n détecteurs D1 à Dn, on peut réaliser la lecture en parallèle des n capteurs.

## Revendications

1. Dispositif de lecture de n capteurs polarimétriques et/ou interférométriques faisant partie d'un réseau monofibre multipoints (F), comportant une fibre optique principale (8) sur laquelle sont disposés n coupleurs à maintien de polarisation (C1-Cn), chacun de ces coupleurs étant relié à une extrémité d'une fibre de compensation de déphasage (F1-Fn), dont l'autre extrémité est reliée via un polariseur (P1-Pn) à un détecteur (D1-Dn), les fibres de compensation étant telles que la somme de la longueur de fibre principale depuis l'entrée (E) de la fibre principale jusqu'au coupleur correspondant (L1, L1+L2, ... L1+L2+...+Ln) et de la longueur de chacune de ces fibres de compensation compense le retard produit dans la fibre (F) du réseau de capteurs.

2. Dispositif selon la revendication 1, caractérisé par le fait que l'extrémité de la fibre principale est reliée à un détecteur supplémentaire (Dr).

3. Dispositif selon l'une des revendications 1 ou 2, caractérisé par le fait que les détecteurs sont reliés à un dispositif central de contrôle et de traitement (9).

4. Dispositif selon l'une des revendications 1 à 3, caractérisé par le fait que les fibres sont des fibres monomodes biréfringentes à conservation de polarisation.

5. Dispositif selon l'une des revendications précédentes, caractérisé par le fait que les capteurs sont adressés en faible cohérence.

6. Dispositif selon l'une des revendications précédentes, caractérisé par le fait que les longueurs de fibres sont ajustées à la longueur de dépolarisation, qui est fonction de la longueur de cohérence de la source et de la biréfringence des fibres optiques.

7. Dispositif selon l'une des revendications précédentes, caractérisé par le fait qu'il comporte un modulateur de polarisation (7) en amont de la fibre principale.

8. Dispositif selon l'une des revendications 3 à 7, caractérisé par le fait que le dispositif central de contrôle et de traitement assure l'adressage séquentiel des détecteurs et le comptage/décomptage des franges d'interférences.

9. Dispositif selon la revendication 8, caractérisé par le fait que le comptage et le décomptage des franges d'interférences sont réalisés à partir des variations du rapport des intensités relatives fournies par les différents détecteurs des fibres secondaires à l'intensité du signal fourni par le détecteur secondaire.

## Patentansprüche

1. Einrichtung zum Lesen von n polarimetrischen und/oder interferometrischen Meßwertaufnehmern, die einen Teil eines Mehrpunkt-Einfasernetzes (F) bilden, die eine Hauptlichtleitfaser (8) enthält, an der n Koppler mit Polarisationserhaltung (C1-Cn) angeordnet sind, wobei jeder dieser Koppler mit einem Ende einer Phasenverschiebungs-Kompensationsfaser (F1-Fn) verbunden ist, deren anderes Ende über einen Polarisator (P1-Pn) mit einem Detektor (D1-Dn) verbunden ist, wobei die Kompensationsfasern von der Art sind, daß die Summe aus der Länge der Hauptfaser von dem Eingang (E) der Hauptfaser bis zum entsprechenden Koppler (L1, L1 + L2 ..., L1 + L2 + ... + Ln) und aus der Länge einer jeden dieser Kompensationsfasern die Verzögerung kompensiert, die in der Faser (F) des Meßwertaufnehmernetzes erzeugt wird.

2.  Einrichtung gemäß Anspruch 1, dadurch gekennzeichnet, daß das Ende der Hauptfaser mit einem zusätzlichen Detektor (Dr) verbunden ist.

3.  Einrichtung gemäß einem der Ansprüche 1 oder 2, dadurch gekennzeichnet, daß die Detektoren mit einer zentralen Steuer- und Verarbeitungseinrichtung (9) verbunden sind.

4.  Einrichtung gemäß einem der Ansprüche 1 bis 3, dadurch gekennzeichnet, daß die Fasern einmodige, doppelbrechende Fasern mit Polarisationserhaltung sind.

5.  Einrichtung gemäß einem der vorangehenden Ansprüche, dadurch gekennzeichnet, daß die Meßwertaufnehmer mit schwacher Kohärenz addressiert werden.

6.  Einrichtung gemäß einem der vorangehenden Ansprüche, dadurch gekennzeichnet, daß die Längen der Fasern an die Depolarisationslänge angepaßt sind, welche von der Kohärenzlänge der Quelle und von der Doppelbrechung der Lichtleitfasern abhängt.

7.  Einrichtung gemäß einem der vorangehenden Ansprüche, dadurch gekennzeichnet, daß sie vor der Hauptfaser einen Polarisationsmodulator (7) enthält.

8.  Einrichtung gemäß einem der Ansprüche 3 bis 7, dadurch gekennzeichnet, daß die zentrale Steuer- und Verarbeitungseinrichtung die sequentielle Addressierung der Detektoren und die Aufwärtszählung/Abwärtszählung der Interferenzstreifen gewährleistet.

9.  Einrichtung gemäß Anspruch 8, dadurch gekennzeichnet, daß die Aufwärtszählung und die Abwärtszählung der Interferenzstreifen anhand der Veränderungen des Verhältnisses der von den verschiedenen Detektoren der sekundären Fasern gelieferten relativen Intensitäten zu der Intensität des vom Sekundärdetektor gelieferten Signals ausgeführt werden.

## Claims

1.  Device for reading out n polarimetric and/or interferometric sensors forming part of a multipoint single-fibre network (F), including a principal optical fibre (8) on which are arranged n polarization-maintaining couplers (C1-Cn), each of these couplers being connected to one end of a phase-shift compensating fibre (F1-Fn), the other end of which is connected via a polarizer (P1-Pn) to a detector (D1-Dn), the compensating fibres being such that the sum of the length of the principal fibre from the entrance (E) of the principal fibre to the corresponding coupler (L1, L1+L2, ... L1+L2+... +Ln) and of the length of each of these compensating fibres compensates for the delay produced in the fibre (F) of the sensor network.

2.  Device according to Claim 1, characterized in that the end of the principal fibre is connected to an additional detector (Dr).

3.  Device according to either of Claims 1 and 2, characterized in that the detectors are connected to a central monitoring and processing device (9).

4.  Device according to one of Claims 1 to 3, characterized in that the fibres are polarization-preserving birefringent single-mode fibres.

5.  Device according to one of the preceding claims, characterized in that the sensors are addressed under weak coherence.

6.  Device according to one of the preceding claims, characterized in that the fibre lengths are adjusted to the depolarization length, which depends on the coherence length of the source and on the birefringence of the optical fibres.

7. Device according to one of the preceding claims, characterized in that it includes a polarization modulator (7) upstream of the principal fibre.

8. Device according to one of Claims 3 to 7, characterized in that the central monitoring and processing device provides for the sequential addressing of the detectors and the counting up/counting down of the interference fringes.

9. Device according to Claim 8, characterized in that the counting up and counting down of the interference fringes are carried out on the basis of variations in the ratio of the relative intensities delivered by the various detectors of the secondary fibres to the intensity of the signal delivered by the secondary detector.

# FIG_1

# FIG_3

# FIG_2

AXE DE POLARISATION

FIBRE MULTICAPTEURS

1

$M_n$   $M_3$   $M_2$   $M_1$   $M_0$   $F_d$   Vers 7

F   2   3   4

6

$L_1$   $L_2$   $L_3$   $L_n$

de 4   $F_p$   8   $D_R$

7   E   $C_1$   $C_2$   $C_3$   $C_n$

$F_1$ $P_1$   $F_2$ $P_2$   $F_3$ $P_3$   $F_n$ $P_n$

$P_1$   $P_2$   $P_3$   $P_n$

$D_1$   $D_2$   $D_3$   $D_n$

9

TRAITEMENT ET CONTRÔLE

8

EP 0 399 861 B1